# EUROPEAN PATENT APPLICATION

(11) **EP 4 521 186 A1**
(43) Date of publication of application: **12.03.2025**
(21) Application number: 24190608.0
(22) Date of filing: 24.07.2024
(51) Int. Cl.: G05D 1/20

(54) **TRANSPORT METHOD SWITCHING DEVICE, TRANSPORT SWITCHING METHOD, AND MOVING OBJECT**

(30) Priority: 08.09.2023 JP 2023145709
(71) Applicant: TOYOTA JIDOSHA KABUSHIKI KAISHA, Aichi-ken, 471-8571 (JP)
(72) Inventor: IWAHORI, Kento, Toyota-shi, 471-8571 (JP); YOKOYAMA, Daiki, Toyota-shi, 471-8571 (JP)
(74) Representative: J A Kemp LLP

(57) **Abstract**

A transport method switching device includes a transport information acquisition unit that acquires transport status information indicating a transport status of a moving object capable of moving by unmanned driving, the moving object being transported by a transport device , the transport device being capable of transporting the moving object in a predetermined transport section while movement control for the moving object is stopped; a movement control determination unit that determines whether to start the movement control with respect to the moving object transported by the transport device using the acquired transport status information; and a command generation unit that generates and outputs a control command to move and release the moving object from the transport section by the movement control when the movement control determination unit determines to start the movement control.

## Description

### CROSS-REFERENCE TO RELATED APPLICATIONS

This application claims priority to Japanese Patent Application No. 2023-145709 filed on September 8, 2023, which is incorporated herein by reference in its entirety.

### BACKGROUND

### FIELD

The present disclosure relates to a transport method switching device, a transport switching method, and a moving object.

### RELATED ART

For example, Japanese Translation of PCT International Application Publication No. JP-T-2017-538619 discloses a technique in which, in a production system for producing vehicles, vehicles are transported on an assembly line using a belt, and the vehicles are made to run by remote control from the terminal end of the assembly line to be transported to the parking lot of the production system.

Since the transport method using a belt and the transport method using running of vehicles by remote control are different from each other, smooth switching between these transport methods is desired. If the transport method cannot be switched smoothly, for example, vehicles may fail to be released from the belt at appropriate timings, resulting in a decrease in productivity or the occurrence of abnormalities. Such problems are common to all transport methods using any transport devices capable of transporting vehicles, such as lifters as well as belts.

### SUMMARY

The present disclosure may be realized by the following aspects.
(1) According to one aspect of the present disclosure, a transport method switching device is provided. The transport method switching device includes: a transport information acquisition unit that acquires transport status information indicating a transport status of a moving object capable of moving by unmanned driving, the moving object being transported by a transport device, the transport device being capable of transporting the moving object in a predetermined transport section while movement control for the moving object is stopped; a movement control determination unit that determines whether to start the movement control with respect to the moving object transported by the transport device using the acquired transport status information; and a command generation unit that generates and outputs a control command to move and release the moving object from the transport section by the movement control when the movement control determination unit determines to start the movement control.
   According to the transport method switching device described above, the movement control that has been stopped can be started at an appropriate timing based on the transport status of the moving object transported by the transport device. This makes it possible to suppress or prevent a decrease in the productivity or the occurrence of abnormalities due to, for example, delays in releasing the moving object from the transport device.
(2) In the transport method switching device according to the above aspect, the transport information acquisition unit may acquire a moving object position in the transport section as the transport status information. The movement control determination unit may determine whether to start the movement control using the acquired moving object position.
   According to the transport method switching device described above, the movement control that has been stopped can be started at an appropriate timing based on the moving object position in the transport section.
(3) In the transport method switching device according to the above aspect, the movement control determination unit may determine to start the movement control when the acquired moving object position is upstream from an ending point of the transport section by a predetermined distance.
   According to the transport method switching device described above, the moving object can be released from the transport device before the ending point of the transport section, thereby suppressing or preventing the problem that the moving object stops beyond the ending point while being in an untransportable state.
(4) In the transport method switching device according to the above aspect, the movement control determination unit may determine to start the movement control when at least a part of the acquired moving object position crosses an ending point of the transport section.
   According to the transport method switching device described above, it is possible to determine whether the moving object has reached the transport starting position by an easy method of determining whether at least a part of the moving object position has crossed the ending point of the transport section.
(5) In the transport method switching device according to the above aspect, the transport information acquisition unit may acquire a transport speed of the moving object transported by the transport device as the transport status information. The movement control determination unit further may determine a timing to start the movement control using the acquired transport speed, and may determine whether to start the movement control at the determined timing.
   According to the transport method switching device described above, even when the transport speed of the transport device is switched, it is possible to start the movement control that has been stopped at an appropriate timing based on the transport speed.
(6) In the transport method switching device according to the above aspect, when the acquired transport speed is faster than a predetermined reference speed, the movement control determination unit may set a timing to start the movement control to a timing earlier than a timing when the acquired transport speed is equal to the predetermined reference speed.
   According to the transport method switching device described above, even when the transport speed of the transport device is increased, it is possible to start the movement control at an appropriate timing.
(7) The transport method switching device according to the above aspect may further include a transport instruction unit that outputs an instruction to decrease a transport speed of the moving object transported by the transport device or an instruction to stop transport of the moving object by the transport device when movement of the moving object is not detected after the control command is transmitted to the moving object by the command generation unit.
   According to the transport method switching device described above, by stopping the transport by the transport device when the moving object has not been moved by the movement control, it is possible to obtain time to execute abnormality countermeasures.
(8) In the transport method switching device according to the above aspect, the transport instruction unit may output an instruction to restore the decreased transport speed to an original transport speed or to activate the stopped transport device when abnormality countermeasures are completed with respect to the moving object for which movement has not been detected.
   According to the transport method switching device described above, by thus continuously performing the processes from the abnormality countermeasures to the restoration, the transport device can be rapidly restored after the abnormality countermeasures.
(9) The transport method switching device according to the above aspect may further include a notification unit that provides notification when movement of the moving object is not detected after the control command is transmitted to the moving object by the command generation unit.
   According to the transport method switching device described above, by providing the notification, the abnormality countermeasures for the transport device can be taken into action quickly, thereby facilitating quick restoration of the transport device.
(10) The transport method switching device according to the above aspect may further include a position estimation unit that estimates a position of the moving object using moving object information detected by a moving object detector, the moving object information being at least one of an image of the moving object and 3D point cloud data of the moving object, the moving object detector being configured to detect the moving object information. The command generation unit may generate and output a control command to move the moving object by the movement control using the estimated position of the moving object.

According to the transport method switching device described above, by using the 3D point cloud data, the position of the moving object can be estimated with high accuracy.

The present disclosure may also be implemented in various aspects other than transport method switching devices. For example, the present disclosure may also be implemented in the form of a remote control device, a moving object, a transport device, a transport system, a moving object transport method, a transport device control method, a transport system control method, a computer program for realizing these control methods, a non-transitory storage medium storing the computer program, and the like.

### BRIEF DESCRIPTION OF THE DRAWINGS

Fig. 1 is an explanatory view showing a schematic structure of a transport system including a remote control device as a transport method switching device;
Fig. 2 is an explanatory view showing internal functional structures of a remote control device and a vehicle;
Fig. 3A is a flowchart showing a vehicle running method achieved by the remote control device;
Fig. 3B is a block diagram showing an internal functional structure of a transport control device;
Fig. 4 is a flowchart showing a vehicle transport switching method according to a first embodiment of the present disclosure;
Fig. 5 is a flowchart showing a process routine of a remote control starting process;
Fig. 6 is an explanatory view showing a remote control preparation starting position that is set when transport speed is equal to or less than a reference speed;
Fig. 7 is an explanatory view showing a remote control preparation starting position that is set when transport speed is faster than the reference speed;
Fig. 8 is a flowchart showing a process routine of a remote control starting process in a transport method according to a second embodiment;
Fig. 9 is an explanatory view showing a remote control preparation starting position in a remote control starting process in a transport method according to the second embodiment;
Fig. 10 is a block diagram showing a functional structure of ECU of a vehicle according to a third embodiment; and
Fig. 11 is a flowchart showing a vehicle running method according to the third embodiment.

### DETAILED DESCRIPTION

### A. First Embodiment

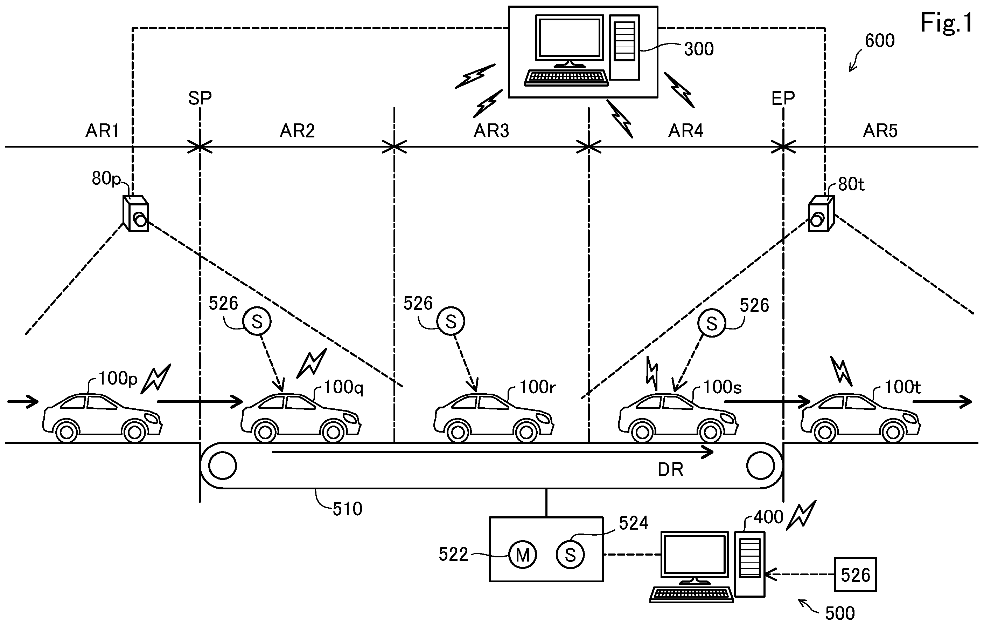

Fig. 1 is an explanatory view showing a schematic structure of a transport system 600 including a remote control device 300 as a transport method switching device according to a first embodiment of the present disclosure. The transport system 600 is used, for example, in a factory where a vehicle 100 is produced. The target to be transported by the transport system 600 is a vehicle 100 capable of running by remote control. For example, the transport system 600 is used in the inspection process or the assembly process of the vehicle 100, and transports the vehicle 100 across a predetermined transport section in the production process of the vehicle 100. The transport system 600 includes the remote control device 300, a vehicle detector 80, and a transport device 500.

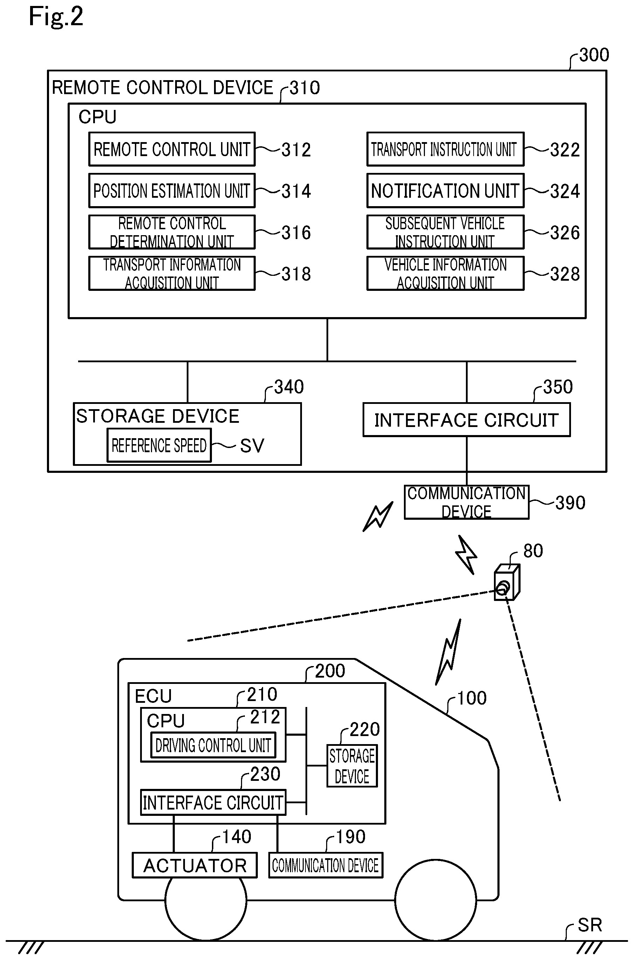

Fig. 2 is an explanatory view showing internal functional structures of the remote control device 300 and the vehicle 100. The vehicle 100 is, for example, a passenger car, a truck, a bus, a construction vehicle, or the like. In the present embodiment, the vehicle 100 is an electric vehicle (BEV: Battery Electric Vehicle) that can run by unmanned driving. The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving." In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100. The vehicle 100 includes a vehicle communication device 190, an actuator 140, and an ECU (Electronic Control Unit) 200.

The ECU 200 is mounted on the vehicle 100 and performs various types of control of the vehicle 100. The ECU 200 includes HDD (hard disk drive), SSD (solid state drive), an optical storage medium, a storage device 220 such as a semiconductor memory, a CPU 210 as the central processing unit, and an interface circuit 230. The CPU 210, the storage device 220, and the interface circuit 230 are connected via an internal bus to enable bidirectional communication. The actuator 140 and the vehicle communication device 190 are connected to the interface circuit 230. The vehicle communication device 190 performs wireless communication with devices outside the vehicle 100, such as the remote control device 300, connected to a network via an access point or the like in the factory.

The storage device 220 stores a computer program to implement at least some functions provided in the present embodiment. As the CPU 210 executes various computer programs stored in the memory, the functions of a driving control unit 212 and the like are implemented.

The driving control unit 212 executes driving control of the vehicle 100. The "driving control" refers to various controls for driving each actuator 140 that exhibits the "running," "turning," and "stopping" functions of the vehicle 100, by, for example, adjusting acceleration, speed, and steering angle. If it is a moving object instead of the vehicle 100, the "driving control" may also be referred to as "movement control". In the present embodiment, the actuator 140 includes an actuator for a driving device for accelerating the vehicle 100, an actuator for a steering device for changing the traveling direction of the vehicle 100, and an actuator for a braking device for decelerating the vehicle 100. The driving device includes a battery, a driving motor driven by electric power of the battery, and driving wheels rotated by the driving motor. The actuator of the driving device includes a driving motor. The actuator 140 may further include an actuator for swinging wipers of the vehicle 100, an actuator for opening and closing power windows of the vehicle 100, and the like.

When the vehicle 100 has a driver, the driving control unit 212 is capable of causing the vehicle 100 to run by controlling the actuator 140 in response to the operation by the driver. Further, the driving control unit 212 is capable of causing the vehicle 100 to run by controlling the actuator 140 in response to control commands transmitted from the remote control device 300, regardless of whether the vehicle 100 has a driver.

The vehicle detector 80 is a device for measuring vehicle information. The "vehicle information" refers to information used for estimation of at least one of the position of the vehicle 100 and the orientation of the vehicle 100. The vehicle detector 80 in the present embodiment corresponds to an external sensor. The external sensor is a sensor located outside the vehicle 100. Further, the vehicle information corresponds to detection results output from the external sensor. In the present embodiment, a LiDAR (Light Detection And Ranging), which is a distance measuring device, is used as the vehicle detector 80. The vehicle detector 80 measures 3D point cloud data of the vehicle 100 as the vehicle information. The 3D point cloud data is data indicating the 3D position of a point cloud. By using a LiDAR, highly accurate 3D point cloud data can be acquired. It is also possible to acquire only the position of the vehicle 100 by the vehicle detector 80, and the orientation and the running direction of the vehicle 100 may be estimated by acquiring position changes or the like of the vehicle 100 over time.

The vehicle detector 80 is communicatively connected to the remote control device 300 by wireless or wired communication. By acquiring the 3D point cloud data from the vehicle detector 80, the remote control device 300 can acquire the position and orientation of the vehicle 100 relative to the target route in real time. The position of the vehicle detector 80 is fixed in the vicinity of a track SR on which the vehicle 100 is scheduled to run and in the vicinity of the transport device 500. The target route in the present embodiment corresponds to a reference route, which is described later.

As shown in Fig. 2, the remote control device 300 generates control commands for enabling automatic running of the vehicle 100 by remote control, and transmits the control commands to the vehicle 100, thereby performing driving control of the vehicle 100 by remote control. The remote control device 300 performs, for example, transport of the vehicle 100 in the transport section in the factory, for example, by performing automatic running of the vehicle 100 by remote control. In the present embodiment, the remote control device 300 also functions as, as described later, a transport method switching device that determines whether to start driving control of the vehicle 100 by remote control using transport status information indicating a transport status of the vehicle 100 transported by the transport device 500.

The remote control device 300 includes a CPU 310 as the central processing unit, a storage device 340, an interface circuit 350, and a remote communication device 390. The CPU 310, the storage device 340, and the interface circuit 350 are connected via an internal bus to enable bidirectional communication. The remote communication device 390 is connected to the interface circuit 350. The remote communication device 390 communicates with the vehicle 100 and a transport control device 400 via a network or the like.

The storage device 340 is, for example, RAM, ROM, HDD, SSD, or the like. A readable/writable region of the storage device 340 stores reference speed SV. The reference speed SV is a transport speed set during normal operation, among variable transport speeds for transporting the vehicle 100 by the transport device 500. The "transport speed set during normal operation" is, for example, a transport speed set in advance to achieve the target production time. The target production time is a production time set for a process to produce a single vehicle 100. The target production time may also be referred to as a "takt time". As described later, the reference speed SV serves as a threshold for determining the timing to release the vehicle 100 from the transport device 500.

The storage device 340 stores a computer program to implement at least some functions provided in the present embodiment. In response to the execution of the computer program stored in the storage device 340 by the CPU 310, the CPU 310 functions as a remote control unit 312, a position estimation unit 314, a remote control determination unit 316, a transport information acquisition unit 318, a transport instruction unit 322, a notification unit 324, a subsequent vehicle instruction unit 326, and a vehicle information acquisition unit 328. However, some or all of these functions may be configured by hardware circuits.

The position estimation unit 314 acquires the vehicle information from the vehicle detector 80, and estimates the position and orientation of the vehicle 100 using the acquired vehicle information. The position and the orientation estimated by the position estimation unit 314 correspond to the vehicle position information, which is described later. In the present embodiment, the position estimation unit 314 uses 3D point cloud data measured by the vehicle detector 80 as the vehicle information. The position estimation unit 314 estimates the position and orientation of the vehicle 100 in the acquired 3D point cloud data. Specifically, the position estimation unit 314 performs template matching on the 3D point cloud data using the vehicle point cloud data stored in the storage device 340 in advance. Therefore, the position and orientation of the vehicle 100 in the 3D point cloud data can be estimated with high accuracy. For example, 3D CAD data of the vehicle 100 can be used for the vehicle point cloud data as a template. The vehicle point cloud data may contain information for specifying the orientation of the vehicle 100. For example, ICP (Iterative Closest Point) algorithm or NDT (Normal Distribution Transform) algorithm can be used for template matching of the vehicle point cloud data with respect to 3D point cloud data.

The remote control unit 312 functions as a command generation unit that generates control commands to cause the vehicle 100 to perform various operations and outputs the control commands to the vehicle 100. For example, the remote control unit 312 generates a control command for remote control using the estimated position and orientation of the vehicle 100, and transmits the control command to the vehicle 100. This control command is a command to cause the vehicle 100 to run according to the target route stored in the storage device 340. The control command can be generated as a command that includes a driving or braking force and a steering angle. By contrast, the control command may be generated as a command that includes the future running route and at least one of the position and orientation of the vehicle 100. When the vehicle 100 receives the request for remote control, the driving control unit 212 of the ECU 200 performs driving control, thereby enabling automatic running of the vehicle 100.

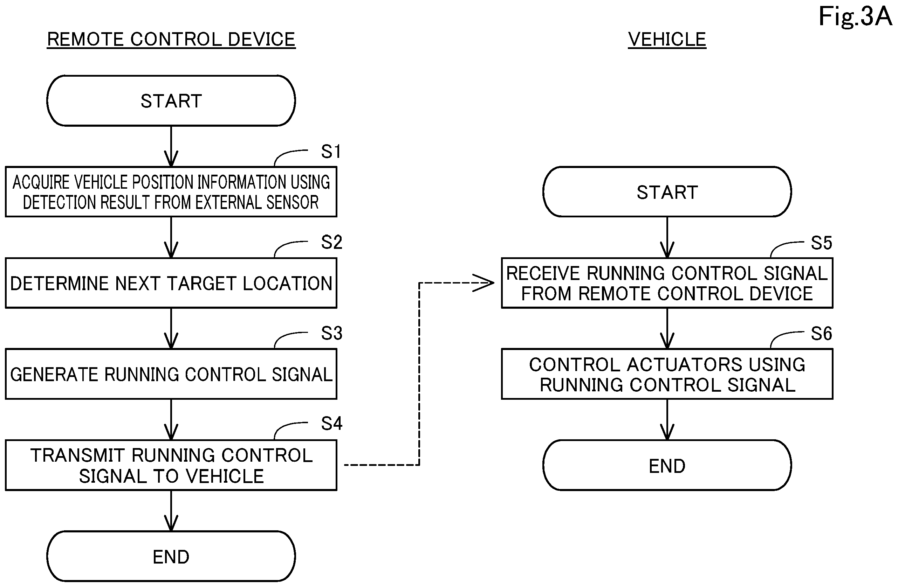

Fig. 3A is a flowchart showing a running method of the vehicle 100 performed by the remote control device 300. In step S1, the remote control device 300 acquires vehicle location information using detection result output from an external sensor. The external sensor is located outside the vehicle 100. The vehicle location information is locational information as a basis for generating a running control signal. In the present embodiment, the vehicle location information includes the location and orientation of the vehicle 100 in a reference coordinate system of the factory. In the present embodiment, the reference coordinate system of the factory is a global coordinate system and a location in the factory can be expressed by X, Y, and Z coordinates in the global coordinate system. Specifically, in the step S1, the remote control unit 312 acquires the results of estimation of the position and orientation of the vehicle 100 by the position estimation unit 314. In the present embodiment, the position of the vehicle 100 includes X, Y, Z coordinates in the global coordinate system of the factory. The position of the vehicle detector 80 is adjusted in advance. The remote control unit 312 detects the position of the vehicle 100 from the vehicle information acquired from the vehicle detector 80, and acquires the position of the vehicle 100 in the factory from the detected position of the vehicle 100.

In step S2, the remote control unit 312 determines a target location to which the vehicle 100 is to move next. In the present embodiment, the target location is expressed by X, Y, and Z coordinates in the global coordinate system. The storage device 340 of the remote control device 300 contains a reference route stored in advance as a route along which the vehicle 100 is to run. The route is expressed by a node indicating a departure place, a node indicating a way point, a node indicating a destination, and a link connecting nodes to each other. The remote control device 300 determines the target location to which the vehicle 100 is to move next using the vehicle location information and the reference route. The remote control device 300 determines the target location on the reference route ahead of a current location of the vehicle 100.

In step S3, the remote control unit 312 generates a running control signal for causing the vehicle 100 to run toward the determined target location. In the present embodiment, the running control signal includes an acceleration and a steering angle of the vehicle 100 as parameters. The remote control unit 312 calculates a running speed of the vehicle 100 from transition of the location of the vehicle 100 and makes comparison between the calculated running speed and a target speed of the vehicle 100 determined in advance. If the running speed is lower than the target speed, the remote control unit 312 generally determines an acceleration in such a manner as to accelerate the vehicle 100. If the running speed is higher than the target speed as, the remote control unit 312 generally determines an acceleration in such a manner as to decelerate the vehicle 100. If the vehicle 100 is on the reference route, remote control unit 312 determines a steering angle and an acceleration in such a manner as to prevent the vehicle 100 from deviating from the reference route. If the vehicle 100 is not on the reference route, in other words, if the vehicle 100 deviates from the reference route, the remote control unit 312 determines a steering angle and an acceleration in such a manner as to return the vehicle 100 to the reference route. In other embodiments, the running control signal may include the speed of the vehicle 100 as a parameter instead of or in addition to the acceleration of the vehicle 100.

In step S4, the remote control unit 312 transmits the generated running control signal to the vehicle 100. The remote control unit 312 repeats the acquisition of vehicle location information, the determination of a target location, the generation of a running control signal, the transmission of the running control signal, and others in a predetermined cycle.

In step S5, the driving control unit 212 of the vehicle 100 receives the running control signal transmitted from the remote control device 300. In step S6, the driving control unit 212 controls the actuator 140 of the vehicle 100 using the received running control signal, thereby causing the vehicle 100 to run at the acceleration and the steering angle indicated by the running control signal. The driving control unit 212 repeats the reception of a running control signal and the control over the actuator 140 in a predetermined cycle. According to the transport system 600 in the present embodiment, it becomes possible to move the vehicle 100 without using a transport unit such as a crane or a conveyor.

Referring back to Fig. 2, the remote control determination unit 316 determines whether to start automatic running by remote control of the vehicle 100 being transported by the transport device 500. The remote control determination unit 316 is an example of a movement control determination unit that determines whether to start movement control of a moving object being transported by the transport device 500. As described later, determination as to whether to start remote control by the remote control determination unit 316 is made by using the transport status of the vehicle 100 transported by the transport device 500.

The transport information acquisition unit 318 acquires transport status information that indicates the transport status of the vehicle 100. The "transport status information" refers to a vehicle position and a transport speed. The "vehicle position" is the position of the vehicle 100 in the transport section of the transport by the transport device 500. The vehicle position may be the position of the entire vehicle 100 or the position of at least a part of the vehicle 100. The transport information acquisition unit 318 acquires a vehicle position VP stored in a storage device 440 from the transport control device 400, or acquires the vehicle position by acquiring the position of the vehicle 100 on a conveyor unit 510 from the vehicle detector 80 if the position of the vehicle 100 on the conveyor unit 510 can be acquired from the vehicle detector 80. The transport information acquisition unit 318 may acquire the vehicle position directly from a transport position detector 526.

The "transport speed" refers to a speed of transporting the vehicle 100 by the transport device 500. In the present embodiment, the transport information acquisition unit 318 acquires a transport speed CV stored in the storage device 440 from the transport control device 400. The transport information acquisition unit 318 may acquire the transport speed directly from a transport speed detector 524.

The transport instruction unit 322 outputs to the transport control device 400 instructions regarding the transport of the vehicle 100 by the transport device 500. The transport instruction unit 322 outputs, for example, an instruction to decrease the transport speed CV of the vehicle 100 or an instruction to stop the transport of the vehicle 100 by the transport device 500 when, for example, an abnormality in the running of the vehicle 100 by remote control is detected. In addition to the instructions to decrease the transport speed CV or to stop the transport, the transport instruction unit 322 may also output instructions to increase the transport speed CV or to start the transport.

The notification unit 324 provides notification of abnormality, for example, when an abnormality in the running of the vehicle 100 by remote control is detected. The notification unit 324 provides notification, for example, when automatic running of the vehicle 100 is not detected after a control command to execute remote control is transmitted to the vehicle 100.

The subsequent vehicle instruction unit 326 outputs an instruction to delay the timing of arrival of a subsequent vehicle at the transport device 500, for example, when an abnormality in the running of the vehicle 100 by remote control is detected. The "subsequent vehicle" is a vehicle scheduled to be transported by the transport device 500 next to the vehicle 100. The subsequent vehicle instruction unit 326 outputs an instruction to delay the timing of arrival of a subsequent vehicle to the transport device 500, for example, when the vehicle 100 is not transported by the transport device 500 or when automatic running of the vehicle 100 is not detected after a control command to execute remote control is transmitted to the vehicle 100.

The vehicle information acquisition unit 328 acquires vehicle identification information of the target vehicle 100 to be transported by the transport device 500 from a production management device or the like. The "vehicle identification information" refers to various types of information that enables individual identification of each vehicle 100. The vehicle identification information includes, for example, ID information given to each vehicle 100, such as a vehicle identification number (VIN), the serial number of the vehicle 100 used for production control, and the like. The vehicle identification information may also be information regarding specifications of the vehicle 100, such as vehicle type, color, and shape. The vehicle identification information is not limited only to information for identifying a single vehicle 100, but may also be information for identifying a plurality of vehicles 100 per predetermined unit, for example, a lot number. The vehicle identification information can be acquired, for example, from radio frequency-identification (RF-ID) tags attached to the vehicle 100 via short-range wireless communication or the like. The vehicle identification information may be acquired by reading a two-dimensional code attached to the vehicle 100 with a camera or the like.

Referring back to Fig. 1, the transport device 500 includes the conveyor unit 510, a motor 522, the transport speed detector 524, a plurality of transport position detectors 526, and the transport control device 400. The motor 522 is controlled by the transport control device 400 to drive the conveyor unit 510.

The conveyor unit 510 transports the target vehicle 100 to be transported, toward a transport direction DR. In the present embodiment, the conveyor unit 510 is a belt conveyor with an annular endless belt, and transports the vehicle 100 placed on the endless belt. The conveyor unit 510 is not limited to the belt conveyor, but may also be a roller conveyor, a chain conveyor, or various other conveyors capable of transporting the vehicle 100. The conveyor unit 510 is continuously driven regardless of whether the vehicle 100 is present on the conveyor unit 510. However, the conveyor unit 510 may only be driven with the vehicle 100 placed on the conveyor unit 510. The target to be transported by the conveyor unit 510 is not limited only to the vehicle 100, and the conveyor unit 510 may also transport, for example, workers who perform processes on the vehicle 100, parts of the vehicle 100, and the like, together with the vehicle 100. Further, the vehicle 100 needs not be transported with all the wheels of the vehicle 100 in contact with the conveyor unit 510; instead, the vehicle 100 may be transported with only the wheels on one side of the vehicle 100 in the width direction in contact with the conveyor unit 510. The conveyor unit 510 is not limited only to a device that transports the vehicle 100 placed on the conveyor unit 510, but may also be a device that transports the vehicle 100 not placed on the conveyor unit 510, such as, so-called a lifter, provided that the vehicle 100 is made ready for running by remote control at the start and end of transport by the conveyor unit 510.

The transport speed detector 524 detects the transport speed of the vehicle 100 being transported by the conveyor unit 510. The transport position detector 526 detects the presence or absence of the vehicle 100 on the conveyor unit 510. The transport position detector 526 is a detector of various kinds capable of detecting the presence or absence of target objects, such as an infrared sensor, an ultrasonic sensor, and a millimeter wave radar. The plurality of transport position detectors 526 are provided at each predetermined transport section of the transport system 600 to detect the presence or absence of the vehicle 100 at each transport section. In other words, the transport position detector 526 is capable of detecting the vehicle position of the vehicle 100 in the transport section of the transport by the transport device 500. The detection results of the transport speed detector 524 and the transport position detector 526 are output to the transport control device 400.

Fig. 1 schematically shows the transport section of the vehicle 100 from a range AR1 to a range AR5. Fig. 1 shows vehicles 100p, 100q, 100r, 100s, and 100t, which are examples of the vehicle 100, and vehicle detectors 80p and 80t, which are examples of the vehicle detector 80. The ranges AR1 and AR5 are transport sections where automatic running of the vehicle 100 is performed by remote control. In the range AR1, the vehicle 100p that has started running from the pre-step runs to the transport device 500 by remote control using the vehicle information acquired from the vehicle detector 80p. The range AR5 is a transport section where the vehicle 100t that has been released from the transport system 600 runs to the next step or the like by remote control using the vehicle information acquired from the vehicle detector 80p.

The ranges AR2 to AR4 are transport sections of the vehicle 100 transported by the transport device 500. The range AR2 is an area where the transport of the vehicle 100 by the transport device 500 is started. In the range AR2, the transport method of the vehicle 100 is switched from self-running conveyance by remote control to the conveyor transport by the transport device 500. In the present embodiment, the range AR2 is set in advance as a range from a starting point SP to a predetermined distance. This "predetermined distance" is determined, for example, based on the range within which the vehicle detector 80p can detect the vehicle 100q. As shown in Fig. 1, the vehicle 100p that runs by remote control enters the range AR2 by crossing the starting point SP on one end of the conveyor unit 510, and becomes ready for transport by the conveyor unit 510.

The range AR3 is an area where the vehicle 100r that is being transported by the transport device 500 undergoes a predetermined process, such as an inspection process. In the present embodiment, the range AR3 is a region outside the detection range by the vehicle detector 80, and automatic running of the vehicle 100r by remote control is not performed in the range AR3. However, in the range AR3, the vehicle 100r may be capable of wireless communication with the remote control device 300, and, for example, remote control without using the vehicle information, such as those for turning on or off the power sources of the vehicle 100 or various units, may be performed. However, the range AR3 may be set within the detection range of the vehicle detector 80, and remote control using the vehicle information may be performed also in the range AR3.

The range AR4 is an area where the transport of the vehicle 100 by the transport device 500 is ended. In the range AR4, the process on the vehicle 100 in the range AR3 is completed, and the vehicle 100s is detectable by the vehicle detector 80t. That is, self-running conveyance by remote control becomes possible in the range AR4, and the vehicle 100s is allowed to run to be released from the conveyor unit 510. In the present embodiment, the range AR4 is set in advance as the range from an ending point EP at the other end of the conveyor unit 510 to a predetermined distance. This "predetermined distance" is determined, for example, based on the range within which the vehicle detector 80t can detect the vehicle 100t. However, the range AR4 can also be a range from the position where the process on the vehicle 100r in the range AR3 is completed to the ending point EP. In this case, the size of the range AR4 is varied depending on the progress of the process for the vehicle 100 in the range AR3.

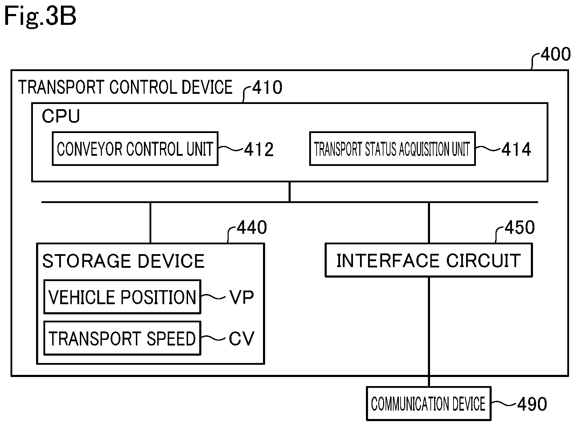

Fig. 3B is a block diagram showing an internal functional structure of the transport control device 400. The transport control device 400 includes a CPU 410 as the central processing unit, the storage device 440, an interface circuit 450, and a transport communication device 490. The CPU 410, the storage device 440, and the interface circuit 450 are connected via an internal bus to enable bidirectional communication. The interface circuit 450 is connected to the transport communication device 490. The transport communication device 490 communicates with the remote control device 300 and the vehicle 100 via a network or the like.

The storage device 440 is, for example, RAM, ROM, HDD, SSD, or the like. A readable/writable region of the storage device 440 stores the transport speed CV detected by the transport speed detector 524 and the vehicle position VP detected by the transport position detector 526. The storage device 440 stores a program to implement at least some functions provided in the present embodiment. The CPU 410 executes the program to function as a conveyor control unit 412 and a transport status acquisition unit 414.

The conveyor control unit 412 drives the motor 522 to control turning on/off and transport speed of the conveyor unit 510. The transport status acquisition unit 414 acquires transport status information. Specifically, the transport status acquisition unit 414 acquires the position of the vehicle 100, i.e., the vehicle position, in the transport section of the transport by the transport device 500 from the transport position detector 526 and stores it as the vehicle position VP in the storage device 440. The position of the vehicle 100 in the transport section may be acquired using the vehicle detector 80. Specifically, the transport status acquisition unit 414 acquires the transport speed CV of the vehicle 100 transported by the transport device 500 from the transport speed detector 524, and stores it as the transport speed CV in the storage device 440.

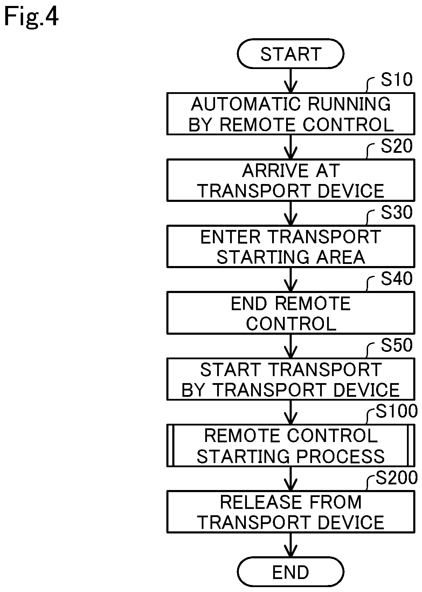

Fig. 4 is a flowchart showing a transport switching method for the vehicle 100 according to the first embodiment of the present disclosure. This flow is started when the vehicle 100 on which the processing in the pre-step has been completed, is given permission to start running toward the transport device 500. In the following description, Fig. 1 is referred to as appropriate to facilitate understanding of the technical details.

In the step S10, the remote control unit 312 causes the vehicle 100p that has started from the pre-step to automatically run toward the transport device 500 by remote control, as shown in the range AR1 in Fig. 1. More specifically, the remote control unit 312 generates a control command for enabling remote control using the position and orientation of the vehicle 100p estimated by the position estimation unit 314, and transmits the command to the vehicle 100p.

In the step S20, the remote control unit 312 causes the vehicle 100p to automatically run by remote control to make it arrive at the transport device 500. The transport control device 400 may acquire the vehicle identification information from the vehicle 100p, etc. that has arrived at the transport device 500, and may confirm whether the acquired vehicle identification information matches the vehicle identification information of the vehicle 100p as the target vehicle to be transported in production control.

In the step S30, as shown in Fig. 1, the remote control unit 312 causes the vehicle 100p to automatically run by remote control using the vehicle information acquired from the vehicle detector 80p. The vehicle 100p enters the range AR2 by crossing the starting point SP of the conveyor unit 510 by automatic running. As a result, the vehicle 100q becomes ready for transport by the conveyor unit 510. The arrival of the vehicle 100p at the range AR2 is detected by the transport information acquisition unit 318 as the transport status.

In the step S40, when the arrival of the vehicle 100p at the range AR2 is detected, the remote control determination unit 316 determines to stop the automatic running of the vehicle 100q by remote control. The stopping of the automatic running of the vehicle 100q by remote control may be performed by stopping the generation of the control commands by the remote control device 300, or by stopping the transmission of the control commands to the vehicle 100q, turning off the power source of the vehicle 100q, and the like. During the transport by the transport device 500, the power consumption of the transport system 600 in remote control can be reduced, and also the processing burden of the transport system 600 and the vehicle 100q in remote control can be reduced. Further, by turning off the power source or the engine of the vehicle 100q, for example, inspections of the electrical system, the engine compartment, and the like of the vehicle 100q by workers can be performed.

In the step S50, the transport control device 400 controls the motor 522 to drive the conveyor unit 510, thereby starting the transport of the vehicle 100q. In the step S100, the remote control starting process is performed by the remote control device 300. The "remote control starting process" is a process to start automatic running by remote control with respect to the vehicle 100 being transported by the transport device 500 or the vehicle 100 for which the transport by the transport device 500 has been completed. In the step S200, as shown in the range AR4 in Fig. 1, the remote control unit 312 starts automatic running of the vehicle 100s by remote control using the vehicle information acquired from the vehicle detector 80t, and releases the vehicle 100s from the conveyor unit 510 to end the flow.

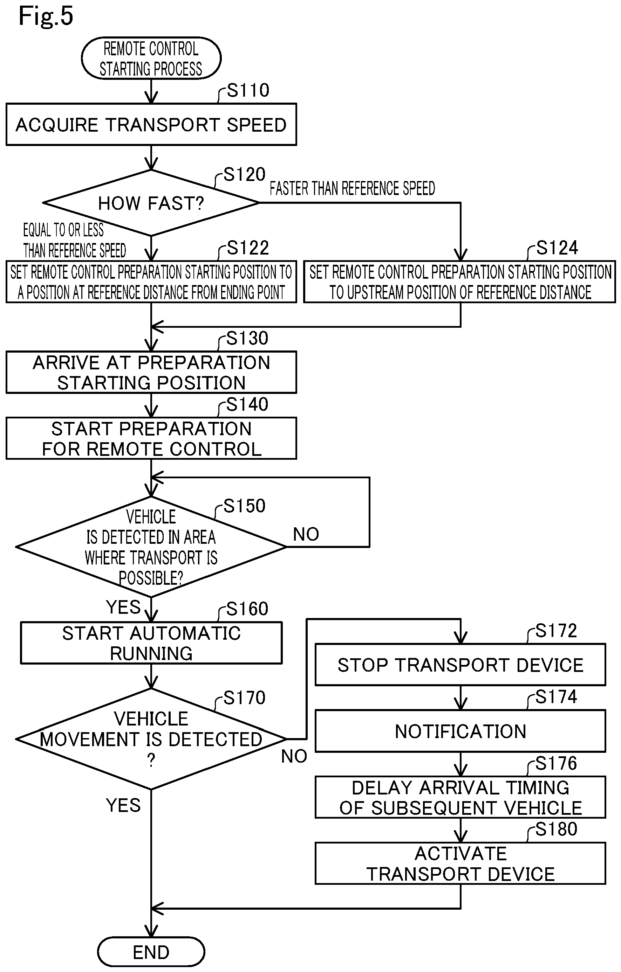

Fig. 5 is a flowchart showing a process routine of the remote control starting process. In the present embodiment, the remote control determination unit 316, when determining to start remote control of the vehicle 100, further determines the timing of starting the remote control of the vehicle 100 using the transport speed CV. The transport speed CV is an example of the transport status.

In the step S110, the transport information acquisition unit 318 acquires the current transport speed of the transport device 500. In the present embodiment, the transport information acquisition unit 318 acquires, as the current transport speed of the transport device 500, the transport speed CV stored in the transport control device 400. In the step S120, the remote control determination unit 316 confirms whether the acquired transport speed CV is faster than the reference speed SV stored in the storage device 340.

If the transport speed CV is equal to or less than the reference speed SV (S120: equal to or less than the reference speed), the remote control determination unit 316 forwards the process to the step S122. In the step S122, the remote control determination unit 316 sets the remote control preparation starting position to a position at a predetermined reference distance from the ending point EP. The "preparation starting position" is the position where the preparation to enable remote control at a predetermined position is started. In the present embodiment, the "predetermined position" is any position within the range AR4. The "reference distance" is the preparation starting position that is set in advance to achieve the target production time with the transport device 500 having the reference speed SV as the transport speed. Examples of the preparation for remote control include turning on the power sources of the vehicle 100 and various units of the vehicle 100, completing the activation of the ECU 200 and the vehicle detector 80, completing the preparations to make the vehicle 100 and the remote control device 300 communicable.

If the transport speed CV is faster than the reference speed SV (S120: faster than the reference speed), the remote control determination unit 316 forwards the process to the step S124. In the step S124, the remote control determination unit 316 sets the remote control preparation starting position to an upstream position that is closer to the starting point SP than the reference distance.

In the step S130, the vehicle 100 is transported by the transport device 500 and reaches the remote control preparation starting position for each transport speed. The fact that the vehicle 100 has reached the preparation starting position can be detected by the transport position detector 526 provided in the range AR3. This detection may be done by the vehicle detector 80 if the vehicle detector 80 is provided in the range AR3. In the step S140, the remote control unit 312 and the remote control determination unit 316 start preparing for remote control by initiating control of various units of the vehicle 100 and the remote control device 300.

In the step S150, the remote control unit 312 detects whether the vehicle 100 has reached an area where remote control is possible, such as the range AR4 shown in Fig. 1. Whether the vehicle 100 has reached the area where remote control is possible can be detected by the transport position detector 526 provided in the range AR4 shown in Fig. 1, or according to the vehicle information or the like acquired by the vehicle detector 80t. If the vehicle 100s in the range AR4 is detected (S150: YES), the remote control determination unit 316 forwards the process to the step S160.

In the step S160, the remote control unit 312 starts the remote control of the vehicle 100s using the vehicle detector 80t. Specifically, the remote control device 300 generates control commands for enabling automatic running of the vehicle 100s by remote control, and transmits the control commands to the vehicle 100s, thereby causing the vehicle 100s to run and releasing the vehicle 100s from the transport device 500. The vehicle 100s that has been released is let out to the next step by automatic running.

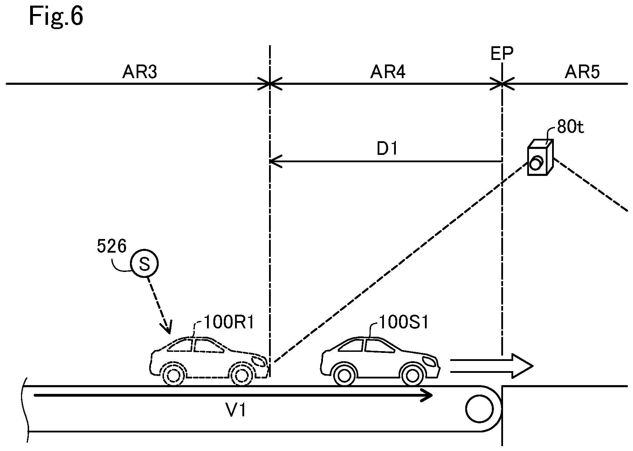

Fig. 6 is an explanatory view showing a remote control preparation starting position that is set when the transport speed CV is equal to or less than the reference speed SV. In the example shown in Fig. 6, the transport speed CV is set to a speed V1, which is the same speed as the reference speed SV. The reference starting position is set at the position of a reference distance D1 from the ending point EP so as to allow the remote control to start at the timing when the vehicle 100 being transported at the speed V1 reaches the range AR4.

As in the vehicle 100R1 in Fig. 6, when the vehicle 100R1 reaches the position of the reference distance D1, preparations to start the remote control is initiated. In the example in Fig. 6, the reference distance D1 is the same as the distance that defines the range AR4. That is, the remote control preparation starting position is at the terminal end of the range AR3. The preparation to start the remote control is initiated after the completion of the transport in the range AR3, and is completed by the time the vehicle 100R1 enters the range AR4.

As in the vehicle 100S1 in Fig. 6, the vehicle 100S1 that has been ready for remote control runs by remote control using the vehicle information acquired from the vehicle detector 80t, and is released from the transport device 500. By completing the preparation for remote control by the time the vehicle reaches the range AR4 where the remote control becomes possible, it is possible to suppress or prevent undesirable delays of the timing for the vehicle 100 to start running by remote control, even if the remote control is stopped during the transport in the range AR3. Further, by completing the preparation for remote control in advance, the range AR4 where the remote control becomes possible can be made smaller.

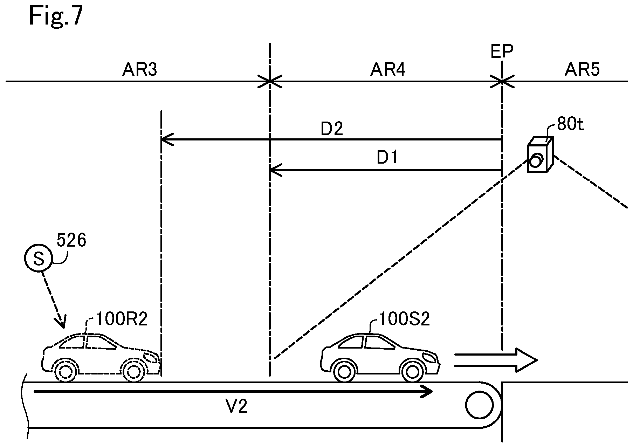

Fig. 7 is an explanatory view showing the remote control preparation starting position that is set when the transport speed CV is faster than the reference speed SV. In the example shown in Fig. 7, the transport speed CV is set to a speed V2, which is faster than the reference speed SV. The reference starting position is set at the position of a distance D2, which is longer than the reference distance D1, from the ending point EP so as to allow the remote control to start at the timing when the vehicle 100 being transported at the speed V2 reaches the range AR4.

As in the vehicle 100R2 in Fig. 7, when the vehicle 100R2 reaches the position of the distance D2, preparations to start the remote control is initiated. The preparation to start the remote control is completed by the time the vehicle 100R2 enters the range AR4. The vehicle 100S2 that has entered the range AR4 automatically runs under remote control and is released from the transport device 500. As described above, if the transport speed CV of the transport device 500 is faster than usual, the preparation for remote control is initiated at a timing earlier than usual. Therefore, even when it is configured to allow the transport speed CV to be switchable, it is possible to suppress or prevent the undesirable delays of the timing for the vehicle 100 to start running by remote control.

Referring back to Fig. 5, in the step S170, after the remote control unit 312 transmits the control command, whether the vehicle 100 has moved by remote control is confirmed. That is, an inspection is performed to determine whether there are any abnormalities in the running of the vehicle 100 by remote control. Whether the vehicle 100 has moved can be detected, for example, from the presence or absence of the vehicle 100 detected by the transport position detector 526 provided in the range AR4, or according to the vehicle information or the like detected by the vehicle detector 80t. If the movement of the vehicle 100 is detected (S170: YES), the remote control unit 312 forwards the process to "end" to end the flow. If the movement of the vehicle 100 is not detected (S170: NO), the remote control unit 312 forwards the process to the step S172 to perform various abnormality countermeasures. The step S172 to the step S176 may be performed in any order or simultaneously.

In the step S172, the transport instruction unit 322 outputs, to the transport control device 400, an instruction to stop the transport device 500, as an example of the abnormality countermeasure. Upon receiving the instruction to stop the transport device 500, the transport control device 400 stops the conveyor unit 510 by stopping the motor 522 or the like, thereby stopping the transport of the vehicle 100. If the abnormality can be resolved quickly, the transport instruction unit 322 may output an instruction to decrease the transport speed CV of the vehicle 100, instead of an instruction to stop the transport device 500.

In the step S174, the notification unit 324 notifies, for example, that the movement of the vehicle 100 is not detected or that the abnormality countermeasure has been executed. The notification unit 324 provides the notification to, for example, workers who perform work on the vehicle 100 on the conveyor unit 510, the manager of the step, or the manager of the transport system 600.

In the step S176, the subsequent vehicle instruction unit 326 outputs an instruction to delay the timing of arrival of the subsequent vehicle at the transport device 500. The subsequent vehicle instruction unit 326 can output the instruction to, for example, a step management device for the pre-step, a production management device that supervises each step, a remote control device that causes the subsequent vehicle to run by remote control, and the like. The subsequent vehicle instruction unit 326 delays the timing of arrival of the subsequent vehicle, for example, according to the delay time relative to the target production time. With this structure, it is possible to prevent the subsequent vehicle from arriving at the transport device 500 before the restoration from, for example, the abnormality in transport by the transport device 500, thereby suppressing or preventing, for example, an increase of in-process products waiting for the transport by the transport device 500, thus suppressing a decrease in production efficiency.

In the step S180, when the abnormality countermeasures from the step S172 to the step S176 are completed, the transport instruction unit 322 outputs, to the transport control device 400, an instruction to activate the transport device 500 that has been stopped. As a result, the transport of the vehicle 100 is restarted, and the process is forwarded to "end" to complete the flow. If the instruction to decrease the transport speed CV of the vehicle 100 has been output instead of the instruction to stop the transport device 500, the transport instruction unit 322 outputs an instruction to restore the decreased transport speed CV to the original transport speed CV to the transport control device 400. In this case, to eliminate the delay relative to the target production time, it is also possible to set the transport speed CV to be faster than the transport speed before the restart. Further, the subsequent vehicle instruction unit 326 restores the delayed running of the subsequent vehicle to normal running.

As described above, the remote control device 300 in the present embodiment includes the remote control determination unit 316 that determines whether to start remote control using the transport status of the vehicle 100 transported by the transport device 500 with respect to the vehicle 100 in a state where driving control has been suspended due to the stopping of the remote control. According to the remote control device 300 of the present embodiment, the remote control that has been stopped can be started at an appropriate timing based on the transport status of the vehicle 100 transported by the transport device 500, thereby allowing the vehicle 100 to be released from the transport device 500 at an appropriate timing. This makes it possible to suppress or prevent a decrease in the productivity or the occurrence of abnormalities due to, for example, delays in releasing the vehicle 100 from the transport device 500.

The remote control device 300 of the present embodiment further includes the transport information acquisition unit 318 that acquires the vehicle position VP in the transport section from the transport control device 400. The remote control determination unit 316 determines whether to start remote control of the vehicle 100 using the acquired vehicle position VP as the transport status. According to the remote control device 300 of the present embodiment, it is possible to release the vehicle 100 from the transport device 500 at an appropriate timing based on the position of the vehicle 100 in the transport section.

According to the remote control device 300 of the present embodiment, the remote control determination unit 316 determines to start remote control when the acquired position of the vehicle 100 is upstream from the ending point EP of the transport section by a predetermined reference distance D1. This enables the vehicle 100 to be released from the transport device 500 before the ending point EP of the transport section, thereby suppressing or preventing the problem that the vehicle 100 stops from the transport device 500 beyond the ending point EP while being in an untransportable state.

The remote control device 300 of the present embodiment further includes the transport information acquisition unit 318 that acquires the transport speed CV of the vehicle 100 transported by the transport device 500. The remote control determination unit 316 further determines the timing to start the remote control of the vehicle 100 using the acquired transport speed CV as the transport status. Therefore, even when the transport speed CV of the transport device 500 is switchable, the remote control that has been stopped can be started at an appropriate timing based on the transport speed CV, thereby allowing the vehicle 100 to be released from the transport device 500 at an appropriate timing.

According to the remote control device 300 of the present embodiment, when the acquired transport speed CV is faster than the predetermined reference speed SV, the remote control determination unit 316 sets the timing to start the remote control of the vehicle 100 to a timing earlier than that when the transport speed CV is equal to the reference speed SV. Therefore, even when the transport speed CV of the transport device 500 is increased, it is possible to start the remote control at an appropriate timing based on the transport speed CV.

The remote control device 300 of the present embodiment further includes the transport instruction unit 322 that outputs an instruction to stop the transport of the vehicle 100 by the transport device 500 if the movement of the vehicle 100 is not detected after the control command is transmitted to the vehicle 100 by the remote control unit 312. By stopping the transport by the transport device 500 when the vehicle 100 has not been moved by remote control, it is possible to obtain time to execute abnormality countermeasures.

In the remote control device 300 of the present embodiment, the transport instruction unit 322 outputs an instruction to activate the transport device 500 that has been stopped when the abnormality countermeasures for the vehicle 100 for which no movement has been detected is completed. By thus continuously performing the processes from the abnormality countermeasures to the restoration, the transport device 500 can be rapidly restored after the abnormality countermeasures.

The remote control device 300 of the present embodiment further includes the notification unit 324 that provides notification when the movement of the vehicle 100 is not detected after the control command is transmitted to the vehicle 100 by the remote control unit 312. With the notification, the abnormality countermeasures for the transport device 500 can be taken into action quickly, thereby facilitating quick restoration of the transport device 500.

The remote control device 300 of the present embodiment further includes the position estimation unit 314 that estimates the position of the vehicle 100 using the 3D point cloud data of the vehicle 100 detected by the vehicle detector 80 as the vehicle information. The remote control unit 312 moves the vehicle 100 by remote control using the position of the vehicle 100 estimated using the 3D point cloud data. By using the 3D point cloud data, the position of the vehicle 100 can be estimated with high accuracy.

### B. Second Embodiment

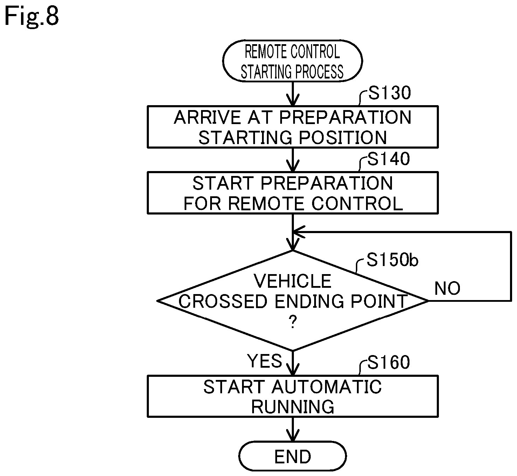

Fig. 8 is a flowchart showing a process routine of a remote control starting process in a transport method according to a second embodiment of the present disclosure. The remote control starting process of the present embodiment differs from the remote control starting process in the first embodiment in that the remote control starting process of the present embodiment does not have the processes from the step S170 to the step S180 of the remote control starting process. Specifically, the first embodiment above shows an example in which the abnormality countermeasures are executed when the movement of the vehicle 100 is not detected after the transmission of the control command of the remote control unit 312. By contrast, as in the present embodiment, the abnormality countermeasures may not be executed. However, any one of the abnormality countermeasures including an action of stopping the transport device 500, notification by the notification unit 324, and output of an instruction to delay the arrival timing of the subsequent vehicle, or any combination of these abnormality countermeasures, may be executed.

Further, the remote control starting process of the present embodiment does not have the processes from the step S110 to the step S124 of the remote control starting process shown in the first embodiment above. The first embodiment above shows an example in which both the transport position and the transport speed are used as the transport status to determine whether to start the remote control. By contrast, as in the present embodiment, the remote control determination unit 316 may use only the acquired transport position of the vehicle 100 without using the transport speed. Further, in this case, as in the present embodiment, it is possible to determine whether to start the remote control of the vehicle 100 using the transport status as to whether at least a part of the vehicle position has crossed the ending point EP of the transport section.

The remote control starting process of the present embodiment has the step S150b instead of the step S150 of the remote control starting process shown in the first embodiment. In the steps S130 and S140, as in the first embodiment, preparation for remote control is initiated when the vehicle 100 reaches the remote control preparation starting position of the transport device 500. In the step S150b, the process is suspended until at least a part of the vehicle 100 for which preparation for remote control is initiated crosses the ending point EP. When the vehicle 100 has crossed the ending point EP (S150b: YES), the remote control unit 312 forwards the process to the step S160 and starts automatic running of the vehicle 100 by remote control using the vehicle detector 80.

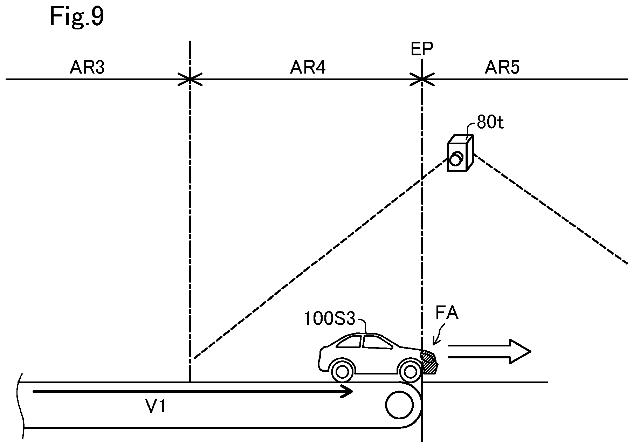

Fig. 9 is an explanatory view showing a remote control preparation starting position in the remote control starting process in the transport method according to the second embodiment. As shown in Fig. 9, when the vehicle 100S3 is transported by the transport device 500 toward the transport direction DR, a part of the vehicle 100S3, for example, a front part FA of the vehicle 100S3, crosses the ending point EP of the transport section of the transport by the transport device 500. When the vehicle detector 80t or the transport position detector 526 detects that the front part FA has crossed the ending point EP, the remote control determination unit 316 determines to start the remote control. Upon accepting the determination result, the remote control unit 312 executes the remote control of the vehicle 100S3 using the vehicle detector 80t, and releases the vehicle 100S3 from the transport device 500.

As described above, the remote control determination unit 316 determines to start the remote control when at least a part of the acquired vehicle position has crossed the ending point EP of the transport section. It is thus possible to determine whether the vehicle 100 has reached the transport starting position by such an easy method of determining whether at least a part of the vehicle position has crossed the ending point EP of the transport section. In addition, by starting the remote control at the timing of crossing the ending point EP, it becomes possible to more easily perform the release from the transport device 500. Further, since the remote control can be started at the timing of crossing the ending point EP, the range AR4 can be reduced or omitted.

### C. Third Embodiment

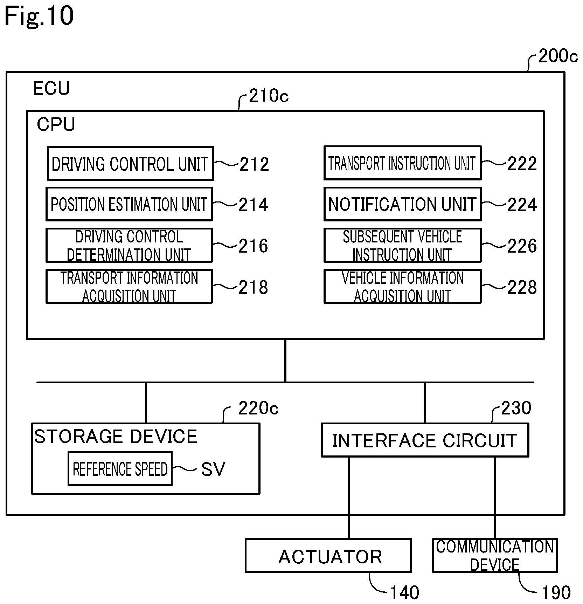

Fig. 10 is a block diagram showing a functional structure of an ECU 200c in the vehicle 100 according to a third embodiment. The transport system 600 in the present embodiment differs from that in the first embodiment in that the transport system 600 of the present embodiment does not include the remote control device 300. Specifically, the transport system 600 of the present embodiment differs from that of the first embodiment in that the ECU 200c provided in the vehicle 100 functions as a transport method switching device in place for the remote control device 300. The rest of the structure of the transport system 600 is the same as that in the first embodiment, unless otherwise specified.

As shown in Fig. 10, the ECU 200c differs from the ECU 200 in the first embodiment in that the ECU 200c includes a CPU 210c instead of the CPU 210 and a storage device 220c instead of the storage device 220. Specifically, in addition to the function of the CPU 210 shown in the first embodiment, the storage device 220c stores programs to implement the functions corresponding to the position estimation unit 314, the remote control determination unit 316, the transport information acquisition unit 318, the transport instruction unit 322, the notification unit 324, the subsequent vehicle instruction unit 326, and the vehicle information acquisition unit 328 of the remote control device 300 shown in the first embodiment. This enables the CPU 210c to further function as the position estimation unit 214, the driving control determination unit 216, the transport information acquisition unit 218, the transport instruction unit 222, the notification unit 224, the subsequent vehicle instruction unit 226, and the vehicle information acquisition unit 228 corresponding to these functions. Further, the storage device 220c also stores the reference speed SV, which is stored in the remote control device 300 in the first embodiment. In the present embodiment, the driving control determination unit 216 determines whether to start automatic running by driving control with respect to the vehicle 100 transported by the transport device 500. The driving control determination unit 216 is an example of a movement control determination unit that determines whether to start movement control of a moving object transported by the transport device 500. Further, the driving control determination unit 216 functions as a command generation unit. When it is determined to start automatic running by driving control, the driving control determination unit 216 as the command generation unit generates and outputs, to the driving control unit 212, a control command to cause the vehicle 100 to run automatically to be released from the transport section by driving control. According to the vehicle 100 configured in this way, since the vehicle 100 has the function as the transport method switching device, the driving control that has been stopped can be started at an appropriate timing based on the transport status of the vehicle 100 transported by the transport device without using a device separate from the vehicle 100, such as the remote control device 300.

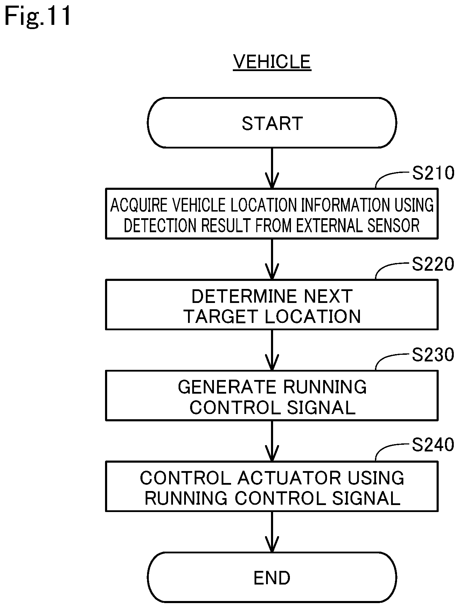

Fig. 11 is a flowchart showing a running method of the vehicle 100 of the present embodiment. In step S210, the position estimation unit 214 acquires vehicle location information using detection result output from external sensor. In step S220, the driving control determination unit 216 determines a target location to which the vehicle 100 is to move next. In step S230, the driving control determination unit 216 generates a running control signal for causing the vehicle 100 to run to the determined target location. In step S240, the driving control determination unit 216 controls the actuator 140 using the generated running control signal, thereby causing the vehicle 100 to run by following a parameter indicated by the running control signal. The vehicle 100 repeats the acquisition of vehicle location information, the determination of a target location, the generation of a running control signal, and the control over the actuator 140 in a predetermined cycle. According to the running control in the present embodiment, it is possible to cause the vehicle 100 to run by autonomous control without controlling the vehicle 100 remotely using the remote control device 300. More specifically, in the step S210, the position estimation unit 214 acquires the position and orientation of the vehicle 100 using the vehicle information output from the vehicle detector 80. Further, in the present embodiment, the reference route is stored in advance in the storage device 220c of the ECU 200c.

### D. Alternative Embodiments

(D1) Each of the embodiments described above shows an example in which the transport speed of the vehicle 100 transported by the transport device 500 or the transport position of the vehicle 100 is used as the transport status. By contrast, instead of the transport speed and the transport position, the transport time from the start of the transport of the vehicle 100 may be used as the transport status.

(D2) In the first embodiment, the remote control determination unit 316 and the driving control determination unit 216 determine to start the remote control when the acquired position of the vehicle 100 is upstream from the ending point EP of the transport section by the predetermined distance D2. By contrast, the remote control determination unit 316 and the driving control determination unit 216 may determine to start the remote control when the position of the vehicle 100 is downstream from the starting point SP of the transport section by the predetermined distance. The same effect can be achieved also in this case.

(D3) The first embodiment above shows an example in which both the transport position and the transport speed are used to determine whether to start the remote control. By contrast, only the transport speed may be acquired without acquiring the transport position. In this case, preparation for remote control can be initiated using the acquired transport speed. For example, if the vehicle 100 is transported at the acquired transport speed, the preparation for remote control can be initiated at a time point after a predetermined time corresponding to the speed has elapsed from the start of the transport of the vehicle. In this case as well, as in the first embodiment, the vehicle 100 can be released from the transport device 500 at an appropriate timing, thereby suppressing or preventing a decrease in productivity or the occurrence of abnormalities in the transport system 600.

Further, only the transport position may be acquired without acquiring the transport speed. In this case, regardless of the transport speed, the preparation for remote control can be initiated, for example, at a time point when the transported vehicle 100 reaches a position at a predetermined distance from the ending point EP, or at a time point when the vehicle 100 has been transported for a predetermined distance from the starting point SP. In this case as well, as in the first embodiment, the vehicle 100 can be released from the transport device 500 at an appropriate timing, thereby suppressing or preventing a decrease in productivity or the occurrence of abnormalities in the transport system 600.

(D4) The first embodiment above shows an example in which, when the transport speed CV is slower than the reference speed SV, the preparation for remote control is initiated at the same timing as that when the transport speed CV is equal to the reference speed SV. By contrast, when the transport speed CV is slower than the reference speed SV, the preparation for remote control may be initiated at a timing later than that when the transport speed CV is equal to the reference speed SV.

(D5) Each of the embodiments described above shows an example in which the vehicle detector 80 is a LiDAR. By contrast, an external camera provided at a different location than the vehicle 100 can be used as the vehicle detector 80 instead of or together with LiDAR. In this case, the vehicle detector 80 acquires images of the vehicle 100 as the vehicle information. The position estimation unit 314 and the position estimation unit 214 can estimate the position of the vehicle 100 and the orientation of the vehicle 100 using captured images acquired by the external camera. In this case, in step S1 in Fig.3A, the remote control device 300 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system, thereby acquiring the location of the vehicle 100. The remote control device 300 can acquire the orientation of the vehicle 100 through estimation based on the direction of a motion vector of the vehicle 100 detected from change in location of a feature point of the vehicle 100 between frames of the captured images using optical flow process, for example. The orientation of the vehicle 100 may also be calculated, for example, using the results of output of a yaw rate sensor or the like mounted on the vehicle 100.

The outer shape of the vehicle 100 in the captured image may be detected by inputting the captured image to a detection model using artificial intelligence, for example. The detection model is prepared in the transport system 600 or outside the transport system 600. The detection model is stored in advance in the storage device 340 of the remote control device 300, for example. An example of the detection model is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label.

(D6) Each of the embodiments described above shows an example in which the vehicle 100 is a passenger car, truck, bus, construction vehicle, or the like. However, the vehicle 100 may be a variety of moving objects. In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a track, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

(D7) In each of the above-described embodiments, the vehicle 100 is simply required to have a configuration to become movable by unmanned driving. The vehicle 100 may embodied as a platform having the following configuration, for example. The vehicle 100 is simply required to include at least actuators and the ECU 200 as a controller. More specifically, in order to fulfill three functions including "run," "turn," and "stop" by unmanned driving, the actuators may include a driving device, a steering device and a braking device. The actuators are controlled by the controller that controls running of the vehicle 100. In order for the vehicle 100 to acquire information from outside for unmanned driving, the vehicle 100 is simply required to include the vehicle communication device 190 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from a factory, or a remaining component such as a bodyshell may be mounted on the vehicle 100 after the vehicle 100 is shipped from a factory while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(D8) The vehicle 100 may be produced by any production method. For example, the vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(D9) In the above-described first embodiment, the remote control device 300 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The remote control device 300 may acquire vehicle location information, determine a target location to which the vehicle 100 is to move next, and generate a route from a current location of the vehicle 100 indicated by the acquired vehicle location information to the target location. The remote control device 300 may generate a route to the target location between the current location and a destination or generate a route to the destination. The remote control device 300 may transmit the generated route to the vehicle 100. The vehicle 100 may generate a running control signal in such a manner as to cause the vehicle 100 to run along the route received from the remote control device 300 and control the actuator 140 using the generated running control signal.
(2) The remote control device 300 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator 140 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the remote control device 300 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(D10) In the above-described embodiment in which the vehicle 100 can be running by autonomous control, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(D11) In the third embodiment described above, the vehicle 100 acquires the position and orientation of the vehicle 100 using the detection result of the vehicle detector 80. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the actuator 140 of the vehicle 100 using the generated running control signal. In this case, the vehicle 100 is capable of running without using any detection result from the vehicle detector 80. The vehicle 100 may acquire target arrival time or traffic congestion information from outside the vehicle 100 and reflect the target arrival time or traffic congestion information in at least one of the route and the running control signal. The functional configuration of the transport system 600 may be entirely provided at the vehicle 100. Specifically, the processes realized by the transport system 600 in the present disclosure may be realized by the vehicle 100 alone. Further, all of the structures of the transport system 600 and the functional structures of the remote control device 300 may be provided in the vehicle 100. In other words, the processes implemented by the transport system 600 and the remote control device 300 shown in the present disclosure may be implemented by the vehicle 100 alone.

(D12) In the above-described first embodiment, the remote control device 300 automatically generates a running control signal to be transmitted to the vehicle 100. By contrast, the remote control device 300 may generate a running control signal to be transmitted to the vehicle 100 in response to operation by an external operator existing outside the vehicle 100. For example, the external operator may operate an operating device including a display on which a captured image output from the vehicle detector 80 is displayed, steering, an accelerator pedal, and a brake pedal for operating the vehicle 100 remotely, and a communication device for making communication with the remote control device 300 through wire communication or wireless communication, for example, and the remote control device 300 may generate a running control signal responsive to the operation on the operating device.

(D13) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(D14) Some or all of the functions of the conveyor control unit 412 or the like implemented by the transport control device 400 shown in each of the embodiments described above may be implemented by the remote control device 300. In other words, the transport system 600 may be configured by the remote control device 300 alone.

In each of the above-described embodiments, some or all of functions and processes realized by software may be realized by hardware. Furthermore, some or all of functions and processes realized by hardware may be realized by software. For example, any type of circuit such as an integrated circuit or a discrete circuit may be used as hardware for realizing the functions described in each of the foregoing embodiments.

The present disclosure is not limited to the embodiments described above and is able to be implemented with various configurations without departing from the spirit thereof. For example, the technical features of any of the embodiment, the examples and the modifications corresponding to the technical features of each of the aspects described in SUMMARY may be replaced or combined appropriately, in order to solve part or all of the problems described above or in order to achieve part or all of the advantageous effects described above. When the technical features are not described as essential features in the present specification, they are able to be deleted as necessary.

## Claims

1. A transport method switching device, comprising:
a transport information acquisition unit (218;318) that acquires transport status information indicating a transport status of a moving object capable of moving by unmanned driving, the moving object being transported by a transport device (500), the transport device (500) being capable of transporting the moving object in a predetermined transport section while movement control for the moving object is stopped;
a movement control determination unit that determines whether to start the movement control with respect to the moving object transported by the transport device (500) using the acquired transport status information; and
a command generation unit that generates and outputs a control command to move and release the moving object from the transport section by the movement control when the movement control determination unit determines to start the movement control.

2. The transport method switching device according to claim 1, wherein
the transport information acquisition unit (218;318) acquires a moving object position in the transport section as the transport status information, and
the movement control determination unit determines whether to start the movement control using the acquired moving object position.

3. The transport method switching device according to claim 2, wherein
the movement control determination unit determines to start the movement control when the acquired moving object position is upstream from an ending point (EP) of the transport section by a predetermined distance.

4. The transport method switching device according to claim 2, wherein
the movement control determination unit determines to start the movement control when at least a part of the acquired moving object position crosses an ending point (EP) of the transport section.

5. The transport method switching device according to claim 1, wherein
the transport information acquisition unit (218;318) acquires a transport speed (CV) of the moving object transported by the transport device (500) as the transport status information, and
the movement control determination unit further determines a timing to start the movement control using the acquired transport speed (CV), and determines whether to start the movement control at the determined timing.

6. The transport method switching device according to claim 5, wherein,
when the acquired transport speed (CV) is faster than a predetermined reference speed (SV), the movement control determination unit sets a timing to start the movement control to a timing earlier than a timing when the acquired transport speed (CV) is equal to the predetermined reference speed (SV).

7. The transport method switching device according to claim 1, further comprising
a transport instruction unit (222;322) that outputs an instruction to decrease a transport speed of the moving object transported by the transport device (500) or an instruction to stop transport of the moving object by the transport device (500) when movement of the moving object is not detected after the control command is transmitted to the moving object by the command generation unit.

8. The transport method switching device according to claim 7, wherein
the transport instruction unit (222;322) outputs an instruction to restore the decreased transport speed to an original transport speed (CV) or to activate the stopped transport device (500) when abnormality countermeasures are completed with respect to the moving object for which movement has not been detected.

9. The transport method switching device according to claim 1, further comprising
a notification unit (224;324) that provides notification when movement of the moving object is not detected after the control command is transmitted to the moving object by the command generation unit.

10. The transport method switching device according to any one of claims 1 to 9, further comprising
a position estimation unit (214;314) that estimates a position of the moving object using moving object information detected by a moving object detector, the moving object information being at least one of an image of the moving object and 3D point cloud data of the moving object, the moving object detector being configured to detect the moving object information,
wherein the command generation unit generates and outputs a control command to move the moving object by the movement control using the estimated position of the moving object.

11. A transport switching method, comprising:
transporting a moving object capable of moving by unmanned driving, using a transport device (500) in a predetermined transport section while movement control for the moving object is stopped;
acquiring transport status information of the moving object being transported;
determining whether to start the movement control with respect to the moving object being transported using the acquired transport status information; and
moving and releasing the moving object from the transport section by the movement control when the movement control is determined to be started.

12. A moving object capable of moving by unmanned driving, comprising:
a transport information acquisition unit (218;318) that acquires transport status information indicating a transport status of the moving object being transported by a transport device (500), the transport device (500) being capable of transporting the moving object in a predetermined transport section while movement control for the moving object is stopped;
a movement control determination unit that determines whether to start the movement control with respect to the moving object transported by the transport device (500) using the acquired transport status information; and
a command generation unit that generates and outputs a control command to move and release the moving object from the transport section by the movement control, when the movement control determination unit determines to start the movement control.
